Europäisches Patentamt

European Patent Office

Office européen des brevets

(11) Publication number: **0 477 446 A1**

# EUROPEAN PATENT APPLICATION

(21) Application number: **90310598.9**

(22) Date of filing: **27.09.90**

(51) Int. Cl.⁵: **H04N 1/46**

(43) Date of publication of application:
**01.04.92 Bulletin 92/14**

(84) Designated Contracting States:
**DE FR GB**

(71) Applicant: **ITEK GRAPHIX CORP.**
**800 South Street**
**Waltham Massachusetts 02254-0955(US)**

(72) Inventor: **Bach, Anthony Guy**
**Garthland, Park View Road**
**Woldingham, Surrey CR3 7DH(GB)**
Inventor: **Neilson, Peter John**
**Ivy Cottage, Wallow Green**
**Horsley, Stroud, Gloucestershire GL6**
**0DP(GB)**

(74) Representative: **Read, Matthew Charles et al**
**Venner Shipley & Co. 368 City Road**
**London EC1V 2OA(GB)**

(54) **An improved optical system for stagger compensation in an optical scanner.**

(57) A color separation scanner capable of compensating for stagger introduced by scanning includes an analysing drum (12) having a circumferential surface to receive original art work, an illumination source (14) for transmitting light to an image point (20) on the drum surface the source being movable transversely of the direction of rotation of the analysing drum, a collection lens system (32, 34, 36) disposed in an optical scanning head moveable transversely of the direction of rotation of the analysing drum to receive light from the image point (20), a spectrum separating prism (68) for receiving light from the collection lens system and separating it into a spectrum such that a waveband of the spectrum can be selected for detection, a rotary scanning aperture (24) disposed in the optical path from the prism (68), the aperture (24) selectively transmitting light corresponding to portions of said image point for correcting transversely displaced portions of the light, and a detector (26) for receiving and detecting light from said variable scanning aperture (24) corresponding to a waveband selection of light from image point.

EP 0 477 446 A1

TECHNICAL FIELD

The present invention relates to an improved optical system for a color separation scanner, more particularly, to an improved optical system capable of compensating for stagger introduced during scanning.

BACKGROUND AND OBJECTS OF THE INVENTION

Color separation scanners are used to scan original artwork and separate an image into individual color components, i.e. blue, green and red wavebands. The resulting data for the blue, green and red wavebands is most commonly used to produce monochrome halftone separation images on separation films. The monochrome separation films are subsequently used to make printing plates, usually for four color printing with traditional yellow, magenta, cyan and black process inks. Of course, continuous and halftone separation films may be made and used in other processes.

In particular, the present invention pertains to color scanners of the type generally disclosed in United Kingdom patent number 1,600,005 issued to Neilson and Pickering entitled "Improvements In Or Relating To Electro-Optical Scanning". In the scanner there disclosed, reflective or transparent artwork containing an image to be analyzed is mounted on a rotating analyzing drum. An image point on the original artwork is illuminated with focused light from a light source and analyzed as the analyzing drum rotates at high speed with the scanning head advancing transversely across the surface of the drum at a slower speed. Each image point is scanned three times during successive rotations of the drum to obtain density data for the three separate wavelength band components, i.e. blue, green and red, necessary to make yellow, magenta, cyan and black separation films.

The foregoing type of scanner, wherein three successive drum rotations are used to detect three waveband components of an image point, advantageously permits use of a single detector to sense all wavebands. This eliminates the need for color drift compensation between detectors and reduces scanner cost.

Theoretically, three rotations of the analyzing drum are completed prior to advancing the scanning head so that blue, green and red density data is collected from identical points on the original image. It has been found, however, that the simultaneous rotation of the scanning drum and transverse movement of the scanning head result in misalignment of the blue, green and red images detected for any given point on the original image. In other words, by the time each successive drum rotation is complete the scanning head has advanced slightly, e.g. one third of a pixel, in the longitudinal directing along the drum. Consequently, the blue, green and red images are not in accurate alignment for each image point, and the resulting blue, green and red waveband density data do not correspond precisely for each image point. This causes, among other things, undesirable color fringing at detail edges and increased signal noise.

Therefore, it is one object of the present invention to provide a color scanner wherein all waveband images corresponding to a given image pixel are in optical alignment.

It is a further object of the present invention to provide a scanning color head for a color scanner having a rotating drum, wherein all waveband images corresponding to a given image pixel are in optical alignment.

Another object of the invention is to provide a color scanner that is not susceptible to color fringe effects.

Another object of the invention is to provide a color scanner with improved signal noise.

These and other highly desirable and unusual results are accomplished by the present invention in an economical, reliable and compact color scanner optical system.

Objects and advantages of the invention are set forth herein and in part will be obvious herefrom, or may be learned by practice with the invention, the same being realized and attained by means of instrumentalities and combinations pointed out in the appended claims.

The invention consists of the novel parts, constructions, arrangements, combinations, steps and improvements herein shown and described.

SUMMARY OF THE INVENTION

In accordance with the invention, an optical scanner is provided having a rotating analyzing drum to receive an original transparency or reflective artwork. An image spot on the drum is illuminated and the illuminating light is modulated by the original artwork. The analyzing drum rotates three times so that a single detector can collect red, green and blue waveband data for each image point. The modulated light from the artwork is collected and magnified, if desired, before passing through a fixed scanning aperture. Variable scanning apertures then sequentially transmit portions of the image from the fixed scanning aperture for detection. The variable scanning apertures' sequential transmission of portions of the image received from the fixed aperture compensates for the stagger introduced during multiple rotations of the analyzing drum as a scanning head simultaneously traverses across the analyzing drum.

In the preferred embodiment, the image point on the analyzing drum is illuminated with white light and the modulated image is collected and transmitted to a fixed scanning aperture. The fixed aperture defines the area of the transparency analyzed in the circumferential direction only, i.e., a pixel height.

After passing through the fixed aperture, the light is collimated by a lens and passes through a prism which splits the light into a spectrum. The spectral image point is refocused by a lens onto a waveband selecting disc rotating at one third the rotational speed of the analyzing drum to allow only the red, green or blue parts of the spectrum to pass, in sequence, for each revolution of the analyzing drum. The selected part of the spectrum then falls onto the variable scanning aperatures which correct for the optical stagger caused by the scanning head transvering the analyzing drum. The corrected image then falls onto a photomultiplier and is converted into an electrical signal, which represents the density of the image. The variable apertures define the area of the image analyzed in the axial direction, i.e., the pixel width. Each variable aperture is displaced from its neighbor by the amount which corresponds to one third of the aperture width, and therefore defines an area axially displaced by one third of the pixel width, thereby correcting optical stagger.

In sum, each waveband corresponds to one selected image portion which, in turn, is optically displaced to compensate for the lateral displacement of the optical scanning head after each analyzing drum rotation. In other words, two of the three waveband scans are optically "back-stepped" relative to the preceding waveband scan to ensure that all waveband data for each image point or pixel is accurately aligned, thereby eliminating color fringe and noise effects.

Thus, the present invention advantageously and efficiently obtains stagger compensation by optically adjusting the portion of the image detected during each waveband scan, i.e. during each successive rotation of the analyzing drum, so that all waveband data for each image point is in alignment. Remarkably, these highly desirable results are obtained without adding appreciably to the size, weight or cost of the optical scanner.

It will be understood that the foregoing general description and the following detailed description as well are exemplary and explanatory of the invention but are not restrictive thereof.

## BRIEF DESCRIPTION OF THE DRAWINGS

The accompanying drawings, referred to herein and constituting a part hereof, illustrate the preferred embodiment of the present invention, and together with the description serve to explain the principles of the invention, in which:

FIGURE 1 is an optical schematic diagram of an optical scanner illuminating system in accordance with the preferred embodiment of the invention;

FIGURE 2 is an elevation view of the waveband selection disc in accordance of the invention;

FIGURE 3 is an elevation view of the variable scanning apertures in accordance with the preferred embodiment of the invention.

## DETAILED DESCRIPTION OF THE PREFERRED EMBODIMENT

Referring now to the drawings, there is shown an optical system 10 for a color scanner having a rotating scanning drum 12 and an illumination source 14. A beam of light from the source is focused by illumination optics at an illumination spot 20 on the surface of the drum to illuminate an image point on original artwork (not shown) placed on the drum. It should be understood that although a transmission-type illumination system is illustrated herein, it is contemplated that reflection-type illumination could be used for reflective artwork in a known manner. By way of example, the illumination beam might be diverted into a fiber optic cable which delivers light to image spot 20 at an angle to the original artwork, such as in a traditional 45°- 90° reflective illumination configuration.

Light from the illuminated image spot 20 is transmitted through a fixed scanning aperture 22, separated into 3 wavebands by a color separating prism 68, focused onto a waveband selection disc 24, and directed through the variable scanning apertures 28 for detection by a photomultiplier 26. The waveband data is stored, processed, and used to expose one or more separation films in a known manner.

As shown, light from the illuminated image spot 20 is collected and transmitted by a main objective lens 32 to magnification optics 34. Magnification optics 34 may, for example, consist of a lens turret equipped with various lens configurations to provide a number of different magnifications. The magnified image is transmitted to fixed scan aperture 22, which may be on the order of .053 inches by 0.88 inches.

The resulting image from the fixed aperture 22 is then transmitted to a second lens 36 for collimating same. The light from lens 36 is then refracted by color separating prism 68 into a spectrum separated image. In the preferred embodiment, the spectrum separated image is focused by lens 70 onto the rotating waveband selection disc 24. A selected waveband of the image is then directed to the variable scanning apertures 28 for correcting the optical stagger caused by the transverse scanning of the analyzing drum. The corrected image is then detected by photomultiplier 26.

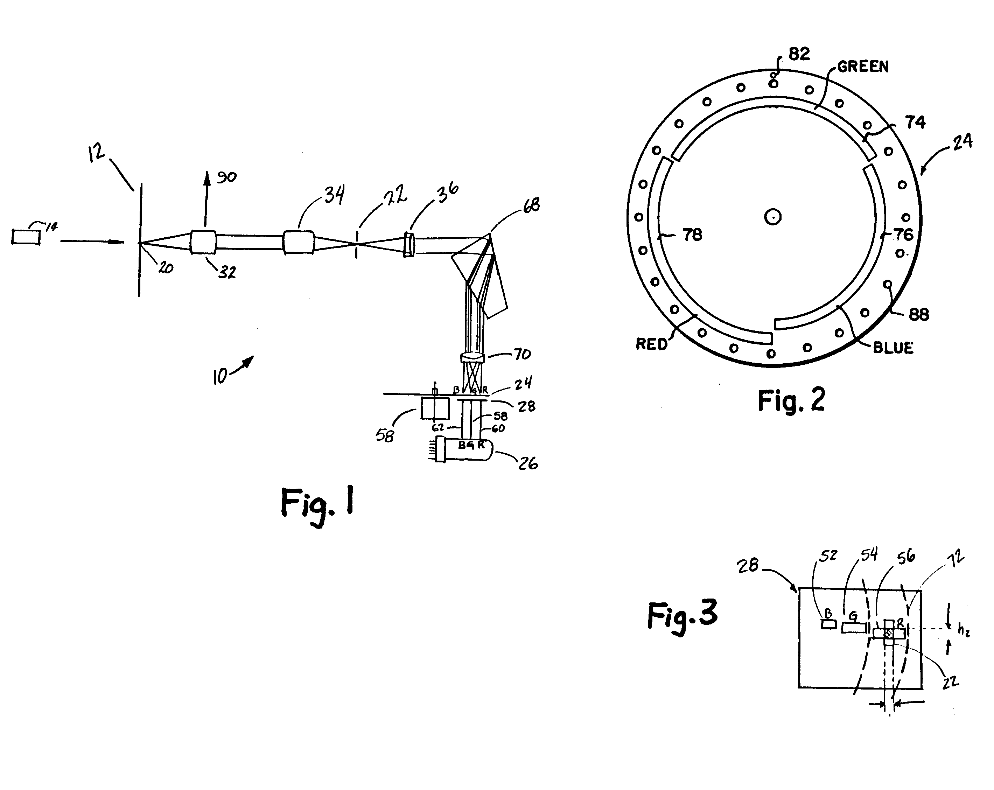

Figure 2 is of the waveband selection disc 24. A set of partial circumferential slits 74, 76, and 78 is provided to select different waveband regions of the spectrum separated image for detection by photomultiplier 26 (see Figure 1). As shown in the preferred embodiment, the waveband selection slits cover approximately 120° of arc. The waveband selection slits overlap the spectrum separated image and each waveband slit transmits a portion of the waveband separated image for detection. Thus, outermost waveband selection slit 78 corresponds to the red portion of the spectrum separated image incident on the disc, with waveband selection slits 74 and 76 corresponding to the green and blue portions of the spectrum separated image, respectively.

Figure 3 is an elevation view of the variable scanning apertures 28 shown in Figure 1. Three apertures 52, 54, and 56 are provided for selecting and transmitting a portion of the light received from fixed aperture 22. As shown in Figure 3, the outer scanning aperture 56 overlaps a portion of fixed aperture 22 and transmits a portion of the light received therefrom during one third the rotation period of the waveband selection disc 24, here, the red region as selected by slit 72. In actuality, the image of the fixed scanning aperture 22 is spread as a spectrum across all three variable scanning apertures 52, 54 and 56. Inter-mediate scanning aperture 54 and inner scanning aperture 52 overlap a portion of fixed aperture 22 and transmit a portion of the image received therefrom during one third of the period of rotation of the waveband selection disc 24. Preferably, the light transmitted by intermediate aperture 54 overlaps and transmits sixty percent of each of the image regions transmitted by apertures 52 and 56. Each of these apertures is displaced from its neighbor by an amount which corresponds to one-third of the aperture width, and therefore defines an area on the drum axially displaced by one-third of the pixel width. Thus, as disc 24 is rotated by motor 58 (see Figure 1), waveband selected light falls onto the variable scanning apertures 52, 54, and 56 which successively transmit overlapping displaced portions of the image received from the fixed scanning aperture 22 to correct optical scanning stagger.

Also shown in Figure 3 is the resulting pixel image size. Distance $h_1$ represents the pixel height as defined by fixed aperture 22 and distance $h_2$ represents the pixel width as defined by variable apertures 52, 54 and 56.

Variable scanning apertures also help to define more precisely the spectral areas which are 52, 54 and 56 passed in the red, green and blue regions since slits 72, 74 and 76 of waveband selection disc 24 are prone to machining errors and eccentricity.

The relationship between the image portions transmitted by variable scanning apertures 52, 54, and 56 and the illumination spot 20 on drum surface 12 can be explained in relation to Figure 1 as follows. Intermediate or center aperture 54 transmits light corresponding to the on-axis green image portion illustrated as ray diagram section 58. Inner aperture 52 transmits light corresponding to the left-hand blue image portion illustrated as ray diagram section 62 and outer aperture 56 transmits light corresponding to a right-hand red image portion illustrated as ray diagram section 60.

It will be appreciated from the foregoing discussion that, because light receiving regions 56 and 78 are aligned, as shown in Figure 3, red waveband data will be collected during transmission of the right hand image portion 60 by variable scanning aperture 56. Likewise, green waveband data will be collected during transmission of the center image portion 58 by intermediate variable scanning aperture 54 and blue waveband data will be collected during transmission of the left hand image portion 62 by inner variable scanning aperture 52. During transmission of any given portion of the spectrum separated image the remaining image portions are blocked by the waveband selection disc 24.

It is important that waveband selection disc 24 rotate in synchronization with the analyzing drum. In the preferred embodiment wherein three wavebands are to be detected, disc 24 should rotate at one third the speed of the analyzing drum so that the analyzing drum completes three full rotations, i.e. one for each waveband, during each rotation of disc 24. To ensure proper synchronization, uniformly spaced clock speed holes 88 are provided on disc 24 in order to monitor the rotational speed and relative position of disc 24 using a traditional electro-optical sensor. A color change marker 82 provides a zero point to indicate the beginning of a disc rotation cycle. A position marker (not shown) is provided on the analyzing drum to indicate a location where no original artwork should be placed. With the analyzing drum and disc properly aligned and driven in synchronization, each color change occurs in as the position marker on the analyzing drum passes the illumination spot 20. In this manner, each waveband cycle commences as the position marker unoccupied by original artwork passes the illumination spot.

During operation, image spot 20 is illuminated on the surface of the rotating analyzing drum. Light modulated by original artwork on the drum is collected by objective lens 32 and is optically transmitted, with or without magnification, through fixed scanning aperture 22 to variable scanning apertures 52, 54, and 56. The variable scanning apertures determine which portion of the illuminated spot image is selected for detection, thereby permitting correction for the stagger introduced by the continuous transverse advancement of the scanning head across the surface of drum 12. Thus, with the scanning head moving to the right, i.e. in the directed indicated by arrow 90, the right hand portion 60 of the image spot is first transmitted by variable scanning aperture 52 for detection. During the next analyzing drum rotation the scanning head has advanced approximately one third of a pixel, and central image portion 58 is transmitted by variable scanning aperture 54 for detection. Finally, during the third and final analyzing drum revolution the scanning head has advanced yet further, and left hand image portion 62 is transmitted by variable scanning aperture 56 for detection. In this manner, the misalignment introduced by the scanning head is optically corrected and the same image is transmitted for detection during all three drum rotations. In the preferred arrangement of the rotating waveband selection disc 24 and the variable scanning apertures (see Figures 2 and 3), the right hand image portion 60 is detected during red waveband selection, the central image portion 58 is detected during green waveband selection, and the left hand image portion 62 is detected during blue waveband selection.

It will be appreciated that the transverse scanning speed of the optical scanning head varies in direct proportion to desired image resolution. However, since magnification optics 34 are adjusted during any change in resolution so as to alter pixel size, that is scanning head speed and magnification are concurrently adjusted to adjust resolution, the stepping distance between image portions 62, 58, and 60 is also adjusted. Thus, the degree of magnification optically adjusts the image portion stepping distance to conform to the transverse speed of the optical scanning head.

As a further advantage of the present invention, the configuration of the partial circumferential slits of the waveband selection disc 24 as well as the variable scanning apertures may be varied to compensate for the relative sensitivity of the photomultiplier to each waveband. By way of example only, the intermediate variable scanning aperture 54 might be wider than the inner variable scanning aperture 52 in order to increase the intensity of green waveband light reaching photomultiplier 26, thereby compensating for relatively greater sensitivity of the photomultiplier to green light than to blue light.

As is readily apparent to those skilled in the art, the actual size of the pixel analysed on the drum surface depends on the magnification set in the lens 34 which is chosen to give the required resolution. For example, if a resolution of 1,000 pixels per inch is required, the analyzed area should be 1/1000 of an inch square, and the analyzing assembly should traverse 1/1000 of an inch for every three drum resolutions. Selection of the appropriate magnification in lens 34 simultaneously selects the required pixel area and optically corrects for the different axial transverse rate.

Thus, it will be apparent that the stagger compensation optical system according to the present invention advantageously provides an optical system and method for ensuring alignment of all waveband image point data by optically displacing the portion of the image detected during each waveband scan, i.e. each successive rotation of the analyzing drum, by a transverse distance equal to the transverse distance travelled by the optical scanning head during each rotation of the analyzing drum. Surprisingly, this remarkable result is obtained in a light weight, compact structure that does not add appreciable weight, complexity or cost to the scanner.

To the extent not already indicated, it will be understood by those of ordinary skill in the art that the specific embodiment herein described and illustrated may be further modified to incorporate features shown in the specific embodiment. In addition, modifications to the structure shown and described herein will no doubt occur to those of ordinary skill in the art. By way of example only, it is contemplated that the partial circumferential slits could be replaced by a continuous spiral slit rather than independent slits having different radii. It is also contemplated that a different number of image portions or waveband regions could be used, that the arrangement of wavebands and image portions could be altered, and that multiple scanning discs could be used in the preferred embodiment, wherein both waveband selection and stagger correction are performed subsequent to modulation of light by the artwork. It should also be noted that use herein of terms such as "light", "right", "center" and "left" is merely illustrative and should not be construed as restrictive of the invention.

Therefore, the invention in its broader aspects is not limited to the specific embodiments herein shown and described but departures may be made therefrom within the scope of the accompanying claims without departing from the principles of the invention and without sacrificing the chief advantages thereof.

**Claims**

1. An optical scanner comprising:
   an analyzing surface to receive original artwork;

an illumination means for transmitting light to scanning source optics movable across said surface, said light illuminating an image point on said surface;

a variable scanning aperture means selectively transmitting for detection light corresponding to portions of said image point for correcting displaced portions of said light;

a detector for receiving and detecting light from said variable scanning aperture means.

2. An optical scanner comprising:

an analyzing drum having a circumferential surface to receive original art work;

illumination means for transmitting light to scanning source optics movable transverse to the direction of rotation of said analyzing drum, said light illuminating an image point on said drum surface;

collection optical means disposed in an optical scanning head moveable transverse to the direction of rotation of said analyzing drum, said collection optical means receiving light from said image point;

spectrum separation means for receiving light from said collection optical means, separating said light into a spectrum, and selecting a waveband of said spectrum for detection;

variable scanning aperture means disposed in the optical path from said spectrum separation means, said variable scanning aperture means selectively transmitting for detection light corresponding to portions of said image point for correcting transversely displaced portions of said light; and

a detector for receiving and detecting light from said variable scanning aperture means, said light corresponding to a waveband selection image portion of said image point.

3. The optical scanner according to Claim 2 further comprising a fixed scanning aperture disposed in the optical path adjacent said spectrum separation means.

4. The optical scanner according to Claim 2 wherein, during successive rotations of said analyzing drum, data corresponding to each image is detected for at least three wavebands.

5. The optical scanner according to Claim 2 wherein said portions of said light image point are displaced transversely by a distance corresponding to the transverse distance of travel of said optical scanning head during one revolution of said analyzing drum.

Fig. 1

Fig. 2

Fig. 3

EP 0 477 446 A1

European
Patent Office

EUROPEAN SEARCH
REPORT

Application Number

EP 90 31 0598

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 355 219   (ITEK GRAPHIX CORP.)<br>* Column 5, line 42 - column 7, line 10; figures 1-3 *<br>– – – | 1-5 | H 04 N 1/46 |
| A,D | GB-A-1 600 005   (LINOTYPE-PAUL LTD)<br>* Claim 1 *<br>– – – – – | 1 | |

TECHNICAL FIELDS
SEARCHED (Int. Cl.5)

H 04 N

The present search report has been drawn up for all claims

| Place of search | Date of completion of search | Examiner |
|---|---|---|
| The Hague | 27 May 91 | GRUNFELD M.Y.E. |